(19) Europäisches Patentamt
European Patent Office
Office européen des brevets

(11) **EP 2 840 362 B1**

(12) **EUROPEAN PATENT SPECIFICATION**

(45) Date of publication and mention
of the grant of the patent:
**24.02.2021   Bulletin 2021/08**

(51) Int Cl.:
***G01F 1/66*** *(2006.01)*     ***G01F 15/02*** *(2006.01)*

(21) Application number: **13180857.8**

(22) Date of filing: **19.08.2013**

(54) **Flow meter with two temperature sensors in housing**

Durchflussmesser mit zwei Temperatursensoren in einem Gehäuse

Débitmètre comportant un logement de deux capteurs de température

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.02.2015   Bulletin 2015/09**

(73) Proprietor: **KAMSTRUP A/S
8660 Skanderborg (DK)**

(72) Inventors:
• **Nielsen, Søren Tønnes
8355 Solbjerg (DK)**

• **Laursen, Peter Schmidt
8660 Skanderborg (DK)**
• **Sørensen, Jens Lykke
8330 Beder (DK)**

(74) Representative: **Plougmann Vingtoft a/s
Strandvejen 70
2900 Hellerup (DK)**

(56) References cited:
**WO-A1-2009/051588     WO-A2-01/02816
CH-A5- 669 463     US-A1- 2005 183 514**

EP 2 840 362 B1

**Description**

**FIELD OF THE INVENTION**

The present invention relates to a flow meter for measuring a consumption value of a supplied liquid, such as a water meter. In particular, the invention relates to a flow meter with integrated temperature reading of the supplied liquid.

**BACKGROUND OF THE INVENTION**

A flow meter may be used for measuring fluid flow in connection with charging of a consumed quantity (e. g. heat, cooling or water). A flow meter may simply measure the consumed amount, and base the billing on this amount. It is however customary for heat and cooling meters to comprise, or be connected to, temperature sensors to measure the temperature and thereby be able to bill in accordance with energy extracted from the supplied liquid. For water meters, temperature sensors are often not used and billing is normally based on the consumed amount. Nevertheless, a temperature reading of the water may be desired, for example to track problems relating to bacterial growth, to send out frost warnings if the liquid is in risk of freezing, as well as for other reasons.

If a flow meter is equipped with one or more temperature sensors, these temperature sensors are external sensors which are connected to the flow meter via wire connections through the housing, or which are connected to a separate calculator unit, to which also the flow meter is connected.

Generally, a external temperature sensor comprises a sensing area which is inserted into the liquid to obtain direct contact with the liquid.

Connecting temperature sensors by wire connections into the housing introduces an undesired leak passage into the cavity of the housing and it increases the complexity of the flow meter and thereby the cost of manufacturing it. Moreover, external sensors need dedicated mounting into the flow channel which also adds to the complexity of the device. Use of an external calculator unit requires a separate device, and thus also adds to the cost of the equipments.

In US 2012/0206272, a fluid meter is disclosed which uses two temperature sensors for determining whether or not a fluid meter is blocked. One sensor measures the fluid temperature, and one sensor measures the ambient temperature. Both sensors are however external sensors which by means of wire connections are connected to the fluid meter.

In WO 01/02816 A2 a method and apparatus is disclosed for providing compensation of mass flow rate and density for the flow tube of a single straight flow tube Coriolis flowmeter. Thermal stress compensation is provided by the use of a plurality of sensors on various portions of the flowmeter.

In WO 2009/051588 A1 a vibratory flow meter is disclosed for determining a derived fluid temperature of a flow material. The vibratory flow meter includes a meter temperature sensor configured to measure a meter temperature, an ambient temperature sensor for measuring an ambient temperature, and meter electronics coupled to the meter temperature sensor and to the ambient temperature sensor. The meter electronics is configured to receive the meter temperature and the ambient temperature and determine the derived fluid temperature of the flow material in the vibratory flow meter.

In CH669463 is disclosed a gas flow meter with a flow channel, a cavity and a temperature sensor arranged in the cavity, where the temperature sensor has direct access to the gas flowing in the flow channel whereby the temperature off the gas is measured.

In US 2005/0183514 A1 a flow meter is disclosed including a flow tube and two temperature sensors arranged near the inner side of a flow tube and at the outer side of the flow tube. By measuring the temperature at these two positions the thermal flux through the wall of the flow tube can be calculated and from it the energy exchanged between the fluid flowing in the flow tube and the ambience.

**SUMMARY OF THE INVENTION**

It would be advantageous to achieve a flow meter capable of measuring or estimating the temperature of the flow liquid in a manner which can be cost-efficiently manufactured. In general, the invention preferably seeks to mitigate, alleviate or eliminate one or more disadvantages of the prior art.

Accordingly, in a first aspect, there is provided a flow meter arranged to measure a consumption value of a supplied liquid, the flow meter comprising:

- a flow tube having a flow tube wall and a through-going flow channel defining a passage of the liquid;
- a housing attached to the flow channel, the housing comprising a cavity with a cavity wall in contact with the liquid;
- a measuring means arranged in the cavity for measuring the consumption value;
- an electronic circuit arranged in the cavity for operating the measuring means; wherein the housing is formed:

- monolithically with the flow tube and the cavity wall is shared between the housing and the flow tube; or
- separate from the flow tube and the cavity wall is part of the housing and forms part of the flow tube wall, characterized in that the flow meter further comprises at least two temperature sensors arranged in the cavity, wherein a first temperature sensor is arranged to measure a temperature of the cavity wall in contact with the liquid, and a second temperature sensor arranged to measure an ambient temperature of the cavity inside the cavity and wherein the electronic circuit comprises a processing unit configured to receive a first temperature reading of the first temperature sensor and a second temperature reading of the second temperature sensor, and based on the first and second temperature readings to estimate a liquid temperature of the supplied liquid.

A flow meter is thus provided which comprises internal temperature sensors placed inside the cavity of the housing, i.e. the temperature sensors are placed in the same compartment as the measuring means and the electronic circuit for operating the measuring means. By placing the temperature sensors inside the cavity, electrical connections of the temperature sensors to the electronic circuit can be provided without a need for openings in the housing. In this manner, the flow meter is simplified since handling which would be required to connect external equipment with internal components is avoided, and since the need for tightening any openings to the ambient is also avoided.

The ambient temperature influences the operation of the flow meter components, whereas the temperature of the cavity wall area, due to its contact with the flowing liquid, reflects the liquid temperature. By obtaining these two temperature measurements from sensors placed inside the housing, a flow meter is provided where the electronics compartment may be manufactured as a single unit, and therefore in a cost-effective manner. But which may nevertheless provide temperature readings which are relevant for the operation of the flow meter, such as estimated battery lifetime which depends on the cavity temperature, as well as for determining various properties of the supplied liquid, such as risk of frost burst or risk of bacterial growth.

The two temperature readings are used to calculate or estimate the temperature of the supplied liquid. This is obtained by providing the electronic circuit with a processing unit configured to receive the first temperature reading of the first temperature sensor and the second temperature reading of the second temperature sensor, and based on these temperature readings to generate a liquid temperature reading of the supplied liquid. The liquid temperature may be calculated based on a thermodynamic model. An advantage of such a temperature reading is that it can be obtained without direct fluid contact of the sensors, i.e. without providing any holes into the flow channel for inserting the sensors, however it comes with a cost of the precision of the temperature reading. In general, the precision depends on the applied algorithm of the processing unit, and may be determined based on a compromise between power consumption needed for the temperature calculation and a desired precision of the temperature estimate. A precision below 3 °C can be obtained with simple modelling, whereas more advanced models may provide a precision below 1 °C or even better.

In an advantageous embodiment, the processing unit may generate an alarm indication based on the first and/or second temperature reading and/or the liquid temperature reading. For example in connection with risk of frost bursts, proper measures may be taken in advance to lower this risk. Temperature reading of the liquid may also be used by the utility, e.g. in connection with water meters, for documenting the water quality supplied to a consumer.

The presence of the second temperature sensor for measuring the ambient temperature of the cavity has the benefit, that in addition to providing a temperature reading which may be used for calculating the liquid temperature, that this temperature reading is important in connection with estimating the expected battery lifetime. Advantageously, an alarm may be generated if the temperature rises above a predetermined limit, possibly in connection with a time that the temperature is above the limit. This may be extended to a report of the time periods the meter temperature is within predefined temperature ranges.

In an advantageous embodiment, the cavity is in un-opened contact with the flow channel via the cavity wall area. That is, the no holes are provided in the cavity wall in the area of the flow channel. It is advantageous to avoid any openings into the flow channel from the cavity, since such openings needs handling in connection with mount of sensors, and leak tightening afterwards. In an embodiment, the housing may even be formed so that it has only a single opening which can be closed off with a cover to form a closed cavity. In such an embodiment, a single unit flow meter can be provided which nevertheless is capable of determining the temperature of the flowing liquid.

In embodiments, the flow meter may be or may be part of a charging consumption meter or utility meter, e.g. a water meter for cold and/or hot water, heat meter, cooling meter, energy meter or smart meter, where the consumption meter is arranged for measuring consumption data of a supplied utility used as a basis for billing. The consumption meter may be used in connection with district heating, district cooling and/or distributed water supply. The consumption meter may be a legal meter, i.e. a meter which is subdued to regulatory demands. Such regulatory demands may be demands to the precision of the measurements. The flow meter is most advantageously used as a water meter.

The flow meter may in general be any type of flow meter, but is advantageously an ultrasonic flow meter.

## BRIEF DESCRIPTION OF THE DRAWINGS

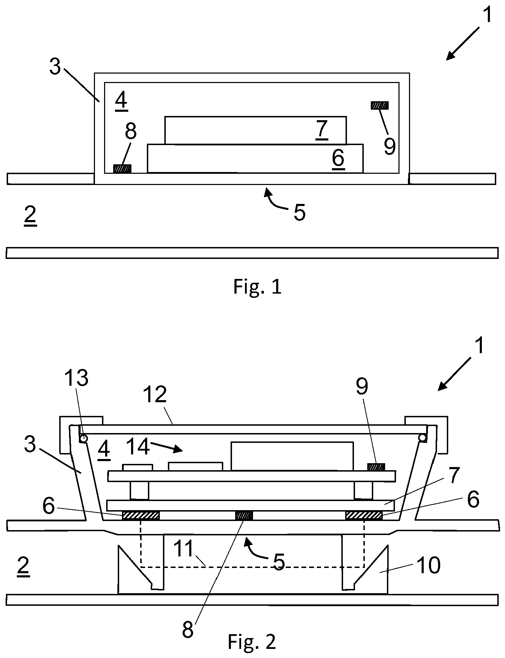

Embodiments of the invention will be described, by way of example only, with reference to the drawings, in which Fig. 1 illustrates a schematic illustration of elements of a flow meter, whereas Fig. 2 illustrates an embodiment of the flow meter in the form of an ultrasonic flow meter.

## DESCRIPTION OF EMBODIMENTS

A general embodiment of the invention is illustrated in Fig 1. The figure is a schematic illustration of elements of a flow meter 1 arranged to measure a consumption value of a supplied liquid. The flow meter comprising a through-going flow channel 2 defining a passage of the liquid between an inlet and an outlet, and a housing 3 attached to the flow channel. The housing 3 comprises a cavity 4 in contact with the flow channel via a cavity wall area 5. The housing is attached to the flow channel. In one embodiment, the housing is a separate housing which by means of an attachment means or locking means is mounted onto the flow tube to provide an assembly, in this situation the cavity wall is formed by the housing. In another embodiment, the housing may be formed monolithically with the flow channel to form a single unit, and in this manner be attached to the flow tube. In this situation, the cavity wall is shared by the flow tube and the housing. The housing further encloses a measuring means 6 for measuring the consumption value, and an electronic circuit 7 for operating at least the measuring means. The flow meter further comprises at least two temperature sensors 8, 9 also arranged in the cavity. The first temperature sensor 8 is arranged to measure a temperature of the cavity wall area, and the second temperature sensor 9 is arranged to measure an ambient temperature of the cavity.

Figure 2 illustrates an embodiment of the flow meter in the form of an ultrasonic flow meter. The figure illustrates the flow meter in a schematic cross-sectional view. In an ultrasonic flow meter the measuring means 6 are in the form of piezo electric transducers. The transducers are arranged in a plane parallel manner, and the ultrasonic signal 11 is directed from an emitting transducer 6, through the flow tube, to the receiving transducer 6, by use of a measurement insert 10.

The transducers are together with control electronics 7 formed on a first PCB, and further electronic elements, such as a display, a communication circuit, general processing circuits, etc. 14 are provided on a second PCB. In general, the processing circuits may be provided by one or more microprocessors, either formed as ASICS or general purpose processors. Two PCB are illustrated, however in embodiment, all components may be provided on a single PCB, or on more than two PCBs.

The ultrasonic flow meter of embodiments of the present invention is a transit time flow meter arranged to measure a flow rate of a liquid flowing in the flow passage 2 by use of the known operation principle for transit time flow meters, where ultrasonic signals are emitted at one transducer and received at the other transducer, and where the difference in time-of-arrival between oppositely propagating signals is measured and converted into a flow rate. The piezoelectric transducers are operated by the control circuit 7, which based on the involved signals generate a signal or value indicative of the flow rate of the liquid. The level of signal treatment of the control circuit may vary from basic signal treatment, where processed signals are output to a further electronic unit for further signal processing, to a complete signal treatment resulting in the determination of the flow rate. Such further electronic units are advantageously provided inside the cavity. In this manner, the housing only comprises a single opening, which forms a closed cavity when the single opening of the housing is closed with a cover 12 by use of only a single sealing means 13. Advantageously, such a single-opening housing further comprises a radio circuit for transmitting at least the quantity value as well as a power supply, e.g. a battery (not shown), for powering the flow meter.

In the illustrated embodiment, the cavity is in unopened contact with the flow channel via the cavity wall area 5. That is, the bottom wall 5 of the housing is without holes or openings so that water cannot penetrate through the bottom wall. The transducers are positioned on the inside of the cavity in acoustic contact with sections of the bottom wall (cavity wall area). Thus the ultrasonic signals are transmitted through the wall to enter and exit the flow tube. To ensure a proper transmission of the ultrasonic signal through the wall, the wall thickness at least in the coupling area, i.e. the wall area through which ultrasonic signals are coupled, may be adapted in accordance with the so-called matching layer principle where the thickness of the wall is adjusted to a proper thickness to ensure proper transmission of the emitted ultrasonic wave of the ultrasonic transducer through the wall and into the flow channel, possibly under the constraint that the area should have thickness which ensures a sufficient strength. The thickness of the wall may be matched to the acoustic wavelength of the emitted ultrasonic wave of the transducer.

In the illustrated embodiment, the housing is formed monolithically together with the flow tube. In this embodiment, the cavity wall area 5 is shared between the housing and the flow tube. In another important embodiment, the housing is formed separate from the flow tube, but still with a single opening which can be closed off by a cover. In such embodiment, the first cavity wall is part of the housing, but when mounted on the flow tube also forms part of the flow tube wall.

The flow meter further comprises two temperature sensors, a first 8 for measuring the temperature of the cavity wall in contact with the flowing liquid, and a second 9 for measuring the ambient temperature of the cavity. The temperature sensors 8, 9 may be such sensors as thermo-couple sensors, thermo-resistive sensors or infrared diode sensors, etc.

In the illustrated embodiment, the first temperature sensor 8 is placed on the outer surface of the flow channel in order to measure the temperature of the cavity wall area. This may e.g. be relevant for thermo-couple or thermo-resistive sensors. Whereas an infrared diode sensor may be, but need not be, placed in contact with the flow tube in order to measure the temperature of the cavity wall area, instead it may simply point towards the cavity wall area.

The second temperature sensor may in general be arranged on an inner structure which is not in direct contact with the flow channel. In the illustrated embodiment, the sensor is placed on the surface of a PCB which is not in direct contact with the flow tube wall. However other positions are possible as long at the temperature in the mount position reflects the ambient temperature.

The two temperature sensors may be mounted directly on the PCBs together with the other components. In an advantageous embodiment, the temperature sensors are mounted in the general SMD-process in connection with the manufacturing of the PCBs. In this manner the added production cost of the two temperature sensors is minimal.

In a simple model, the temperature of the supplied liquid can generally be determined by thermodynamic considerations where the heat flux through the outer surface of the flow tube is:

$$\frac{1}{A}\frac{dQ}{dt} = \frac{1}{A}\frac{dQ}{dt}_{FLOW} + \frac{1}{A}\frac{dQ}{dt}_{RAD} + \frac{1}{A}\frac{dQ}{dt}_{CONV} = 0$$

That is, the heat flux is the heat provided by the flowing liquid, the heat lost due to radiation loss and convection loss.

Generally, heat loss of the flow is provided by Joule's law:

$$\frac{\Delta Q}{\Delta t}_{FLOW} = -A\lambda\frac{(T_C - T_L)}{d}$$

where A is the surface area, $\lambda$ the heat loss constant which depends on the material choice of the cavity wall, and d the well thickness of the first cavity wall areas, $T_C$ is temperature of the ambient temperature of the cavity as measured by the sensor 9 and $T_L$ is the temperature of the supplied liquid.

The heat loss from radiation is given by the Stefan-Boltzmann law, whereas the heat lost from convection is given by Newton's cooling law:

$$\frac{\Delta Q}{\Delta t}_{RAD} = A\varepsilon\sigma(T_W^4 - T_C^4); \quad \frac{\Delta Q}{\Delta t}_{CONV} = Ah(T_S - T_C)$$

where $\varepsilon$ is the wall emissivity, $\sigma$ the Stefan-Boltzmann constant, and $h$ is the heat transfer constant, and $T_W$ is the temperature of the cavity wall as measured by the sensor 8.

Solving the heat loss equation with the proper constants will give the temperature of the liquid as a function of the two measured temperatures.

A solution to the heat transfer equations may obtained be use of a properly programmed processing unit which is arranged to obtained the two temperature readings, and calculate the liquid temperature.

In more complicated solutions of the above equations, such aspects as time-varying emissivity and heat transfer constant, as well as dependence of the flow speed, is taken into account.

In general, the temperature measurement may be improved by controlling various heat loss related features. For example, by evacuating the cavity or by providing a controlled atmosphere in the cavity, the heat loss from convection may be better controlled, and by providing bright internal surfaces, such as use of batteries with a highly reflective surface, heat loss from radiation may be better controlled.

By measuring the liquid temperature, it is possible to generate an alarm indication if the temperature is outside pre-specified ranges. For example, if the liquid temperature get below 2 °C, possible in connection with a low cavity temperature and a low flow, an alarm may be generated and send to the consumer, which may shut off the water supply valve, and empty the flow channel to avoid frost burst. Another example is that if the liquid temperature gets above 20 °C, again possibly in connection with a low flow, an alarm may be generated and send to the consumer that a certain flow is needed to remove risk of bacteria in the liquid. In general, the alarm may be based on the measured liquid temperature, however often a more specific alarm may be generate if the alarm is combined with the flow measurement and the ambient temperature of the cavity.

Many flow meters comprise a radio circuit for transmitting wirelessly the measured consumption values. Advantageously, the data channel used for transmitting the measured consumption values is further used for transmitting data based on the readings obtained from the first and/or second temperature sensor, such as alarm. Depending on the alarm, the utility can decide whether it should take action, e.g. by sending an SMS or email to the consumer.

**Claims**

1.    A flow meter (1) arranged to measure a consumption value of a supplied liquid, the flow meter comprising:

- a flow tube having a flow tube wall and a through-going flow channel (2) defining a passage for the liquid;
- a housing (3) attached to the flow channel, the housing comprising a cavity (4) with a cavity wall (5) in contact with the liquid;
- a measuring means (6) arranged in the cavity for measuring the consumption value;
- an electronic circuit (7) arranged in the cavity for operating the measuring means;

wherein the housing (3) is formed:

- monolithically with the flow tube and the cavity wall (5) is shared between the housing (3) and the flow tube; or
- separate from the flow tube and the cavity wall (5) is part of the housing and forms part of the flow tube wall,

**characterized in that** the flow meter further comprises at least two temperature sensors (8, 9) arranged in the cavity, wherein a first temperature sensor (8) is arranged to measure a temperature of the cavity wall (5) in contact with the liquid, and a second temperature sensor (9) is arranged to measure an ambient temperature inside the cavity, and
wherein the electronic circuit (7) comprises a processing unit configured to receive a first temperature reading of the first temperature sensor and a second temperature reading of the second temperature sensor, and based on the first and second temperature readings to estimate a liquid temperature of the supplied liquid.

2.    The flow meter according to claim 1, wherein the processing unit is configured to generate an alarm indication based on the first and/or second temperature reading and/or the liquid temperature estimate.

3.    The flow meter according to claim 2, wherein the alarm indication is a risk indication of frost burst, a risk indication of bacterial supporting conditions or a temperature indication based on the first and the second temperature reading.

4.    The flow meter according to any of the preceding claims wherein the first temperature sensor (8) is arranged on an outer surface of the flow channel.

5.    The flow meter according to any of the preceding claims wherein the second temperature sensor (9) is arranged on an inner structure which is not in direct contact with the flow channel (2).

6.    The flow meter according to any of the preceding claims wherein at least one of the first or second temperature sensor (8, 9) is mounted on a printed circuit board (PCB).

7.    The flow meter according to any of the preceding claims wherein the first or second temperature sensor (8, 9) is a thermo-couple sensor, a thermo-resistive sensor or an infrared diode sensor.

8.    The flow meter according to any of the preceding claims wherein the cavity (4) is in un-opened contact with the flow channel (2) via the cavity wall (5).

9.    The flow meter according to any of the preceding claims wherein the housing (3) further comprises a single opening and a cover (12), and wherein the housing forms a closed cavity (4) when the single opening of the housing is closed with the cover.

10.    The flow meter according to any of the preceding claims which further comprises a radio circuit for transmitting wirelessly the measured consumption value, and for transmitting data based on the readings obtained from the first and/or second temperature sensor (8, 9).

**Patentansprüche**

1. Durchflussmesser (1), dazu angeordnet, einen Verbrauchswert einer bereitgestellten Flüssigkeit zu messen, wobei der Durchflussmesser Folgendes umfasst:

   - ein Durchflussrohr mit einer Durchflussrohrwand und einem durchgehenden Durchflusskanal (2), der einen Durchgang für die Flüssigkeit definiert;
   - ein Gehäuse (3), das an dem Durchflusskanal befestigt ist, das Gehäuse umfassend einen Hohlraum (4) mit einer Hohlraumwand (5) in Kontakt mit der Flüssigkeit;
   - ein Messmittel (6), das in dem Hohlraum zum Messen des Verbrauchswertes angeordnet ist;
   - eine elektronische Schaltung (7), die in dem Hohlraum zum Betreiben des Messmittels angeordnet ist;

   wobei das Gehäuse (3) wie folgt gebildet ist:

   - monolithisch mit dem Durchflussrohr, wobei die Hohlraumwand (5) zwischen dem Gehäuse (3) und dem Durchflussrohr gemeinsam genutzt wird; oder
   - getrennt von dem Durchflussrohr, wobei die Hohlraumwand (5) ein Teil des Gehäuses ist und einen Teil der Durchflussrohrwand bildet,

   **dadurch gekennzeichnet, dass** der Durchflussmesser ferner zumindest zwei Temperatursensoren (8, 9) umfasst, die in dem Hohlraum angeordnet sind, wobei ein erster Temperatursensor (8) dazu angeordnet ist, eine Temperatur der Hohlraumwand (5) in Kontakt mit der Flüssigkeit zu messen, und ein zweiter Temperatursensor (9) dazu angeordnet ist, eine Umgebungstemperatur innerhalb des Hohlraums zu messen, und wobei die elektronische Schaltung (7) eine Verarbeitungseinheit umfasst, die dazu konfiguriert ist, einen ersten Temperaturmesswert des ersten Temperatursensors und einen zweiten Temperaturmesswert des zweiten Temperatursensors zu empfangen und auf Grundlage des ersten und des zweiten Temperaturmesswerts eine Flüssigkeitstemperatur der bereitgestellten Flüssigkeit zu schätzen.

2. Durchflussmesser nach Anspruch 1, wobei die Verarbeitungseinheit dazu konfiguriert ist, eine Alarmmeldung auf Grundlage des ersten und/oder des zweiten Temperaturmesswerts und/oder der Schätzung der Flüssigkeitstemperatur zu erzeugen.

3. Durchflussmesser nach Anspruch 2, wobei die Alarmmeldung eine Risikomeldung zu frostbedingtem Platzen, eine Risikomeldung zu Bakterienwachstum unterstützenden Bedingungen oder eine Temperaturmeldung auf Grundlage des ersten und des zweiten Temperaturmesswerts ist.

4. Durchflussmesser nach einem der vorhergehenden Ansprüche, wobei der erste Temperatursensor (8) an einer Außenfläche des Durchflusskanals angeordnet ist.

5. Durchflussmesser nach einem der vorhergehenden Ansprüche, wobei der zweite Temperatursensor (9) an einer Innenstruktur, die nicht in direktem Kontakt mit dem Durchflusskanals (2) steht, angeordnet ist.

6. Durchflussmesser nach einem der vorhergehenden Ansprüche, wobei zumindest einer von dem ersten oder dem zweiten Temperatursensor (8, 9) auf einer Leiterplatte (printed circuit board - PCB) montiert ist.

7. Durchflussmesser nach einem der vorhergehenden Ansprüche, wobei der erste oder der zweite Temperatursensor (8, 9) ein Thermoelement-Sensor, ein thermoresistiver Sensor oder ein Infrarotdioden-Sensor ist.

8. Durchflussmesser nach einem der vorhergehenden Ansprüche, wobei der Hohlraum (4) über die Hohlraumwand (5) in ungeöffnetem Kontakt mit dem Durchflusskanal (2) steht.

9. Durchflussmesser nach einem der vorhergehenden Ansprüche, wobei das Gehäuse (3) ferner eine einzelne Öffnung und eine Abdeckung (12) umfasst, und wobei das Gehäuse einen geschlossenen Hohlraum (4) bildet, wenn die einzelne Öffnung des Gehäuses mit der Abdeckung geschlossen ist.

10. Durchflussmesser nach einem der vorhergehenden Ansprüche, ferner umfassend eine Funkschaltung zum drahtlosen Übertragen des gemessenen Verbrauchswertes und zum Übertragen von Daten auf Grundlage der von dem ersten und/oder dem zweiten Temperatursensor (8, 9) erhaltenen Messwerte.

**Revendications**

1. Débitmètre (1) agencé pour mesurer une valeur de consommation d'un liquide fourni, le débitmètre comprenant :

   - un tube d'écoulement possédant une paroi de tube d'écoulement et un canal d'écoulement traversant (2) définissant un passage pour le liquide ;
   - un logement (3) fixé au canal d'écoulement, le logement comprenant une cavité (4) avec une paroi de cavité (5) en contact avec le liquide ;
   - un moyen de mesure (6) agencé dans la cavité destiné à mesurer la valeur de consommation ;
   - un circuit électronique (7) agencé dans la cavité destiné à faire fonctionner le moyen de mesure ;

   ledit logement (3) étant formé :

   - de manière monolithique avec le tube d'écoulement et la paroi de la cavité (5) est partagée entre le logement (3) et le tube d'écoulement ; ou
   - séparé du tube d'écoulement et la paroi de la cavité (5) fait partie du logement et forme une partie de la paroi de tube d'écoulement,

   **caractérisé en ce que** le débitmètre comprend en outre au moins deux capteurs de température (8, 9) agencés dans la cavité, un premier capteur de température (8) étant agencé pour mesurer une température de la paroi de cavité (5) en contact avec le liquide, et un second capteur de température (9) étant agencé pour mesurer une température ambiante à l'intérieur de la cavité, et
   ledit circuit électronique (7) comprenant une unité de traitement configurée pour recevoir une première lecture de température du premier capteur de température et une seconde lecture de température du second capteur de température, et sur la base des première et seconde lectures de température pour estimer une température de liquide du liquide fourni.

2. Débitmètre selon la revendication 1, ladite unité de traitement étant conçue pour générer une indication d'alarme sur la base de la première et/ou de la seconde lecture de température et/ou de l'estimation de température de liquide.

3. Débitmètre selon la revendication 2, ladite indication d'alarme étant une indication de risque d'éclatement sous l'effet du gel, d'une indication de risque de conditions de support bactérien ou d'une indication de température sur la base de la première et de la seconde lecture de température.

4. Débitmètre selon l'une quelconque des revendications précédentes, ledit premier capteur de température (8) étant agencé sur une surface externe du canal d'écoulement.

5. Débitmètre selon l'une quelconque des revendications précédentes, ledit second capteur de température (9) étant agencé sur une structure interne qui n'est pas en contact direct avec le canal d'écoulement (2).

6. Débitmètre selon l'une quelconque des revendications précédentes, au moins l'un du premier ou du second capteur de température (8, 9) étant monté sur une carte de circuit imprimé (PCB).

7. Débitmètre selon l'une quelconque des revendications précédentes, ledit premier ou ledit second capteur de température (8, 9) étant un capteur thermocouple, un capteur thermorésistif ou un capteur à diode infrarouge.

8. Débitmètre selon l'une quelconque des revendications précédentes, ladite cavité (4) étant en contact non ouvert avec le canal d'écoulement (2) par l'intermédiaire de la paroi de cavité (5).

9. Débitmètre selon l'une quelconque des revendications précédentes, ledit logement (3) comprenant en outre une seule ouverture et un couvercle (12), et ledit logement formant une cavité fermée (4) lorsque l'ouverture unique du logement est fermée avec le couvercle.

**10.** Débitmètre selon l'une quelconque des revendications précédentes, qui comprend en outre un circuit radio destiné à transmettre sans fil la valeur de consommation mesurée et destiné à transmettre des données basées sur les lectures obtenues à partir du premier et/ou du second capteur de température (8, 9).

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120206272 A
- WO 0102816 A2
- WO 2009051588 A1
- CH 669463
- US 20050183514 A1